# EUROPÄISCHE PATENTANMELDUNG

(11) **EP 4 242 058 A2**
(43) Veröffentlichungstag der Anmeldung: **13.09.2023**
(21) Anmeldenummer: 23182372.5
(22) Anmeldetag: 14.12.2018
(51) Int. Cl.: B60N 2/427

(54) **KINDERSITZ ZUR ANBRINGUNG AUF EINEM KRAFTFAHRZEUGSITZ**

(30) Priorität: 22.12.2017 DE 202017107887 U
(62) Teilanmeldung aus: 18826564.9
(71) Anmelder: CYBEX GmbH, 95448 Bayreuth (DE)
(72) Erfinder: THURN, Christoph, 95448 Bayreuth (DE); MÜLLER, Thomas, 95448 Bayreuth (DE); SCHARFF, Florian, 95448 Bayreuth (DE)
(74) Vertreter: Pfrang, Tilman

(57) **Zusammenfassung**

Kindersitz zur Anbringung auf einem Kraftfahrzeugsitz, umfassend mindestens eine Anlageflächeneinrichtung für ein auf dem Kindersitz aufgenommenes Kind, wobei die Anlageflächeneinrichtung zumindest einen ersten Abschnitt und einen zweiten Abschnitt aufweist, wobei der zweite Abschnitt relativ zum ersten Abschnitt durch Einwirken einer zumindest teilweise nach außen gerichteten, auf den zweiten Abschnitt wirkenden Kraft zur Dämpfung einer Verzögerung des Kindes bei einer Verlagerung des Kindes in Richtung des zweiten Abschnittes von einer ersten Stellung in eine zweite Stellung überführbar ist.

## Beschreibung

Die Erfindung betrifft einen Kindersitz zur Anbringung auf einem Kraftfahrzeugsitz nach Anspruch 1.

Im Stand der Technik sind Kindersitze zur Anbringung auf einem Kraftfahrzeugsitz allgemein bekannt. Derartige Kindersitze weisen eine Anlageflächeneinrichtung zur Aufnahme eines Kindes im Kindersitz auf. Diese Anlageflächeneinrichtung kann beispielsweise durch eine Seitenwand und/oder eine Rückwand definiert sein.

Generell ist eine derartige Anlageflächeneinrichtung vorgesehen, um das Kind sicher, ergonomisch und bequem zu halten sowie um als Barriere gegenüber Elementen, die sich beispielsweise während eines Unfalls (relativ) auf das Kind zubewegen und es verletzen könnten, zu dienen.

Gleichzeitig kann es vorkommen, dass sich ein in dem Kindersitz gehaltenes Kind (oder eines seiner Körperteile) beispielsweise während eines Unfalls relativ zur Anlageflächeneinrichtung verlagert und dann durch die Anlageflächeneinrichtung aufgefangen wird. In einem solchen Fall ist es wünschenswert, dass die beim Auffangen erzeugte Verzögerung des Kinders (oder seines Körperteils) auf verträgliche Werte begrenzt wird, um Verletzungen zu vermeiden oder zumindest zu reduzieren. Zu diesem Zweck weisen übliche Kindersitze in vielen Bereichen eine dämpfende Struktur, z. B. Polsterungen, auf, beispielsweise in Form von textilen Einlagen und/oder weichen Schaumstoffen und/oder Hartschäumen (EPS, EPP, etc.). Zudem ist eine Schale der meisten Kindersitze aus einem Kunststoff gebildet, der gewisse Federungseigenschaften aufweisen kann, wobei die Anlageflächeneinrichtung(en) Teile der Schale(n) sein können.

Aus verschiedenen Gründen werden die Lösungen im Stand der Technik als nachteilig empfunden. So können die elastischen Eigenschaften der Schalen nur recht schwach ausgebildet sein, da die Schale gleichzeitig gegen Einwirkungen von außen schützen muss. Eine Polsterung hingegen muss vergleichsweise weich sein, um für das im Kindersitz gehaltene Kind bequem zu sein. Grundsätzlich vorteilhafte Polsterungen, wie beispielsweise Hysterese-Schäume oder Abstandsgewirke, sind vergleichsweise teuer. Hartschäume wiederum können bei Belastung mit vergleichsweise hohen Kräften beschädigt werden und müssen dann ausgetauscht werden oder bieten nur noch reduzierte Sicherheit.

Es ist daher Aufgabe der Erfindung, auf einfache Art und Weise eine bei einem Auffangen des Kindes durch eine Anlageflächeneinrichtung erzeugte Verzögerung des Kindes zu begrenzen.

Diese Aufgabe wird durch einen Kindersitz gemäß Anspruch 1 gelöst.

Insbesondere wird die Aufgabe durch einen Kindersitz zur Anbringung auf einem Kraftfahrzeugsitz gelöst, wobei der Kindersitz mindestens eine Anlageflächeneinrichtung für ein auf dem Kindersitz aufgenommenes Kind (zur Aufnahme des Kindes bzw. eines Körperteiles des Kindes) aufweist, wobei die Anlageflächeneinrichtung zumindest einen ersten Abschnitt und einen zweiten Abschnitt (Dämpfungsabschnitt) aufweist, wobei der zweite Abschnitt relativ zum ersten Abschnitt durch Einwirken einer zumindest teilweise nach außen gerichteten, auf den zweiten Abschnitt wirkenden Kraft zur Dämpfung einer Verzögerung des Kindes bei einer Verlagerung des Kindes in Richtung des zweiten Abschnittes von einer ersten Stellung in eine zweite Stellung überführbar ist.

Ein Kernaspekt der Erfindung liegt darin, dass der zweite Abschnitt (Dämpfungsabschnitt) zur Begrenzung einer Verzögerung des Kindes (beispielsweise in einer Aufprallsituation) ausgebildet ist. Dadurch kann auf vergleichsweise einfache Art und Weise verhindert werden (oder ein entsprechendes Risiko zumindest reduziert werden), dass sich das Kind aufgrund einer zu starken Verzögerung verletzt. Insgesamt wird dadurch die Sicherheit verbessert.

Grundsätzlich sei angemerkt, dass im Rahmen dieser Erfindung der Begriff "Kindersitz" als Oberbegriff für "klassische" Kindersitze und Babyschalen zu verstehen ist. Insoweit ist (wenn im konkreten Zusammenhang nichts anderes angegeben ist) Kindersitz immer als abkürzende Schreibweise für "Kindersitz, ggf. Babyschale" zu verstehen bzw. im Rahmen dieser Erfindung sind für einen Kindersitz vorgesehene Merkmale grundsätzlich auch auf eine Babyschale anwendbar und umgekehrt (solange nichts Gegenteiliges erwähnt ist). Selbiges gilt für den Begriff "Kind", der ebenfalls als Oberbegriff für Kinder und Babys sowie Kleinkinder zu verstehen ist. Sogenannte "Babyschalen" umfassen oftmals (nur) eine einteilige Schale zur Aufnahme des Babys oder Kindes und können ein eigenes Gurtsystem, ggf. eine Kopfstütze und ggf. weitere Komponenten umfassen. Anstelle einer (strukturell abgegrenzten) Rückenlehne weisen derartige "Babyschalen" einen Rückenabschnitt auf, der sich an einen "Sitzbereich" anschließt, in dem das Gesäß des Kindes aufgenommen werden kann. Kindersitze für größere Kinder haben demgegenüber meist eine strukturell von einem Sitzbereich abgegrenzte Rückenlehne, deren Neigung ggf. gegenüber dem Sitzbereich variiert werden kann. Die strukturelle Abgrenzung kann beispielsweise durch einen Knick oder Ähnliches gebildet sein.

Unter einer Anlageflächeneinrichtung ist insbesondere ein Anlagenflächenelement zu verstehen. Dieses kann (muss aber nicht) einteilig (monolithisch) ausgebildet sein. Erster Abschnitt und/oder zweiter Abschnitt können jeweils für sich und/oder in Ihrer Gesamtheit einstückig (insbesondere monolithisch) oder mehrteilig (als separate Teile) aufgebaut sein. Eine Dicke der Anlageflächeneinrichtung (des Anlageflächenelementes) und/oder des ersten Abschnittes und/oder des zweiten Abschnittes soll vorzugsweise zumindest im Wesentlichen konstant sein. Eine Maximaldicke kann beispielsweise kleiner/gleich dem 3-fachen, weiter vorzugsweise kleiner/gleich dem 2-fachen, weiter vorzugsweise kleiner/gleich dem 1,2-fachen einer Minimaldicke betragen. Eine (insbesondere innere bzw. in Bezug auf den Kindersitz nach innen, also zum Kind hin weisende) Oberfläche des zweiten Abschnittes kann mindestens 5 cm², vorzugsweise mindestens 10 cm² und/oder höchstens 500 cm², vorzugsweise höchstens 200 cm² betragen.

Der zweite Abschnitt kann auch als Wirkungsfläche, insbesondere Wirkungsflächenelement und/oder als Dämpfungsfläche, insbesondere Dämpfungsflächenelement bezeichnet werden. Bei dem ersten Abschnitt kann es sich um die vollständige Anlageflächeneinrichtung handeln, abzüglich des zweiten Abschnittes, oder einen Teil davon. Ggf. umgibt der erste Abschnitt den zweiten Abschnitt vollständig (zumindest in der ersten Stellung bzw. Ruhestellung).

Eine (insbesondere innere bzw. nach innen weisende) Oberfläche des ersten Abschnittes ist ggf. größer als eine (insbesondere innere) Oberfläche des zweiten Abschnittes. Eine (insbesondere innere) Oberfläche des ersten Abschnittes beträgt vorzugsweise mindestens 20 cm², weiter vorzugsweise mindestens 40 cm² und/oder höchstens 5.000 cm², vorzugsweise höchstens 3.000 cm². Die Anlageflächeneinrichtung (das Anlageflächenelement) kann eine Rücken- und/oder Seitenwand ausbilden bzw. Bestandteil einer Rücken- und/oder Seitenwand sein.

Unter einer Überführung von einer (ersten) Stellung in eine andere (zweite) Stellung ist insbesondere zu verstehen, dass der zweite Abschnitt (relativ zum ersten Abschnitt) hinsichtlich seiner Position und/oder Orientierung im Raum verändert wird. Eine Positionsveränderung ist dabei insbesondere eine Verschiebung eines Schwerpunkts des jeweiligen Abschnittes. In diesem Sinne ist eine (reine) Verformung grundsätzlich nicht als Überführung von einer (ersten) Stellung in eine andere (zweite) Stellung anzusehen. Bei der "zweiten" Stellung handelt es sich um eine andere Stellung als die "erste" Stellung. Die "zweite Stellung" muss nicht festgelegt sein uns ist vorzugsweise von der nach außen wirkenden Kraft abhängig, ggf. bis zu einer vorbestimmten maximalen zweiten Stellung. Die zweite Stellung ist insbesondere eine gegenüber der ersten Stellung zumindest teilweise nach außen verlagerte Stellung des zweiten Abschnittes. Bei der Verlagerung des zweiten Abschnittes wir der erste Abschnitt vorzugsweise nicht oder nur geringfügig verlagert (gegenüber einem Schwerpunkt des Kindersitzes).

Unter einer zumindest teilweise nach außen gerichteten Kraft ist eine Kraft zu verstehen, die (zumindest komponentenhaft) von einem Innenraum des Kindersitzes (also einem Aufnahmeraum für das Kind) nach außen gerichtet ist.

Die Zweckangabe "zur Dämpfung einer Verzögerung des Kindes" impliziert insbesondere, dass die Abschnitte (der erste und der zweite Abschnitt) derartig konfiguriert und angeordnet sein müssen, so dass die Dämpfungsfunktion realisiert werden kann. Dies impliziert insbesondere, dass durch Verlagerung des Kindes innerhalb des Aufnahmeraums eine Kraft auf den zweiten Abschnitt wirken kann. Dies wäre insbesondere dann ausgeschlossen, wenn zwischen dem zweiten Abschnitt und dem Kind (im Verlagerungsfall) noch eine Struktur wäre, die dies verhindern würde.

Im Allgemeinen schließt der Begriff "Anlageflächeneinrichtung" (bzw. Anlageflächenelement) nicht aus, dass zwischen Kind und Anlageflächeneinrichtung (bzw. Anlageflächenelement) noch weitere Strukturen vorhanden sind, insbesondere eine Polsterung, solange dadurch nicht verhindert wird, dass durch die Verlagerung des Kindes eine Kraft auf den zweiten Abschnitt einwirken kann, die dann wiederum durch die Konfiguration des zweiten Abschnitts (gegenüber dem ersten Abschnitt) gedämpft werden kann.

Die Anlageflächeneinrichtung (das Anlageflächenelement) kann insbesondere durch eine Sitzschale und/oder eine Kopfstütze definiert werden.

Erster und/oder zweiter Abschnitt sind vorzugsweise strukturell eingegrenzt bzw. abgegrenzt, beispielsweise durch eine Umrandung und/oder eine Knicklinie (oder sonstige, insbesondere gelenkige oder gelenkartige, Abgrenzung).

Vorzugsweise ist in der zweiten Stellung im Vergleich zur ersten Stellung ein Abstand zwischen zumindest einem ersten Umrandungsabschnitt einer Umrandung des zweiten Abschnittes einerseits und dem ersten Abschnitt (bzw. einem benachbarten ersten Umrandungsabschnitt einer Umrandung des ersten Abschnittes) andererseits vergrößert. Der Abstand ist vorzugsweise in der ersten Stellung kleiner als 2 cm, weiter vorzugsweise kleiner als 1 cm, insbesondere (zumindest im Wesentlichen) gleich 0 cm. Weiterhin kann der Abstand in einer zweiten Stellung zumindest abschnittsweise größer als 1,5 cm, vorzugsweise größer als 5,0 cm sein. Unter einem ersten Umrandungsabschnitt einer Umrandung des zweiten Abschnitts ist insbesondere ein Abschnitt der Umrandung des zweiten Abschnittes zu verstehen der gegenüber dem ersten Abschnitt beweglich ist bzw. nicht fest mit diesem verbunden ist. Abhängig von der Geometrie des entsprechenden Umrandungsabschnittes kann es dabei so sein, dass einzelne Punkte auf dem Umrandungsabschnitt eine mehr oder weniger stark ausgeprägte Abstandsvergrößerung erfahren. Insofern wird dadurch eine Vergrößerung des Abstandes erreicht, dass zumindest für mindestens 50 % der Punkte des betrachteten Umrandungsabschnittes eine Abstandsvergrößerung erfolgt. Diese Abstandsvergrößerung muss nicht bei allen Punkten gleich sein. Insoweit konkrete (beispielsweise Minimal- oder Maximal-) Werte für den "Abstand" angegeben werden ist darunter vorzugsweise derjenige Abstand zu verstehen, der sich ergibt, wenn man sämtliche Punkte auf dem betrachteten Umrandungsabschnitt der Umrandung des zweiten Abschnittes hinsichtlich ihres Abstandes zum nächsten Punkt auf dem ersten Abschnitt auswertet. Der bei dieser Auswertung resultierende größte Wert soll dann jeweils als "Abstand" gewertet werden. Wenn beispielsweise in der ersten Stellung, eine erste Anzahl von Punkten auf dem ersten Umrandungsabschnitt der Wandung des zweiten Abschnittes ein Abstand von 1 cm zum jeweils nächstgelegenen Punkt auf dem ersten Abschnitt aufweist und eine zweite Gruppe 2 cm, so gilt vorzugsweise der Wert von 2 cm.

Generell weist insbesondere der zweite Abschnitt (Dämpfungsabschnitt bzw. Dämpfungsfläche) eine Umrandung auf, wobei der erste Umrandungsabschnitt des zweiten Abschnitts durch eine Abgrenzung des zweiten Abschnitts (Dämpfungs- bzw. Wirkungsfläche) von der umgebenden (restlichen) Anlageflächeneinrichtung gebildet wird. Bevorzugt wird ein zweiter Abschnitt der Umrandung durch einen Übergang zur umgebenden (restlichen) Anlageflächeneinrichtung gebildet.

In einer konkreten Ausführungsform ist die Überführung von der ersten Stellung in die zweite Stellung reversibel. Vorzugsweise wird der zweite Abschnitt (die Dämpfungsfläche) von der zweiten Stellung in die erste Stellung rück-geführt, sobald keine Kraft mehr aufgebracht wird bzw. sobald eine bestimmte Kraftschwelle unterschritten wird. Im Allgemeinen erfolgt also eine Rück-Führung vorzugsweise selbsttätig (automatisch). Es ist jedoch auch denkbar, dass eine derartige Rückführung eine entsprechende Aktion (beispielsweise manuell) erfordert.

Vorzugsweise ist der zweite Abschnitt als Klappe (Aufprallklappe) ausgebildet.

In konkreten Ausführungsformen ist der zweite Abschnitt gegenüber dem ersten Abschnitt verschwenkbar, insbesondere als Schwenkklappe ausgebildet. Alternativ oder zusätzlich kann der zweite Abschnitt gegenüber dem ersten Abschnitt translatorisch bewegbar sein, ggf. als translatorische bewegbare Klappe ausgebildet sein. Insbesondere ist also auch eine überlagerte rotatorischtranslatorische Bewegung denkbar, wobei diesbezüglich dem Fachmann entsprechende Mittel bekannt sind (wie beispielsweise Kulissenführungen, gekrümmte Anlaufflächen etc.).

Der zweite Abschnitt ist zumindest abschnittsweise als Feder- insbesondere Blattfeder, ausgebildet (bzw. umfasst eine derartige Feder, insbesondere Blattfeder). Alternativ oder zusätzlich kann der zweite Abschnitt federnd gelagert sein, insbesondere über eine Schraubenfeder. Dadurch kann eine ggf. automatische Rück-Führung in die erste Stellung ermöglicht werden. Weiterhin kann dadurch eine Vorspannung realisiert werden, die der Kraft aufgrund der Verlagerung des Kindes entgegenwirkt (insbesondere im Zusammenwirken mit der weiter unten beschriebenen Blockiereinrichtung). Insgesamt wird auf einfache Art und Weise die Sicherheit verbessert.

Unter einer ersten Stellung ist vorzugsweise eine Ruhestellung zu verstehen, die der zweite Abschnitt einnimmt, wenn entweder überhaupt keine Kraft (aufgrund der Verlagerung des Kindes) einwirkt oder eine bestimmte Kraftschwelle zumindest nicht überschritten wird. Eine zweite Stellung soll dann vorliegen, wenn aufgrund des Einwirkens der entsprechenden Kraft (bzw. Überschreitens einer entsprechenden Kraftschwelle) eine Verlagerung oder Bewegung (z. B. Verschwenkung und/oder translatorische Bewegung) des zweiten Abschnitts gegenüber dem ersten Abschnitt erfolgt ist. Abhängig von der Höhe und Richtung der Kraft kann die zweite Stellung variieren. Insofern ist es möglich, dass die zweite Stellung kontinuierlich über einen gewissen Bereich (beispielsweise Winkelbereich und/oder Strecke) variieren kann oder ggf. in diskreten Schritten (beispielsweise durch einen Ratschen-Mechanismus oder dergleichen).

Die Anlageflächeneinrichtung bzw. der erste und/oder der zweite Abschnitt ist/sind vorzugsweise aus einem (zumindest im Wesentlichen) formstabilen Material geformt. Unter einem formstabilen Material ist insbesondere zu verstehen, dass das Material äußeren Einwirkungen (Drücken) widersteht (zumindest im Wesentlichen). Alternativ oder zusätzlich kann die Anlageflächeneinrichtung bzw. zumindest der erste und/oder zweite Abschnitt aus einem (zumindest im Wesentlichen) unporösen bzw. dichten Material geformt sein. Unter einem (im Wesentlichen) unporösen Material ist vorzugsweise ein Material zu verstehen, das ein Porenvolumen von weniger als 30 %, vorzugsweise weniger als 10 %, noch weiter vorzugsweise weniger als 5 % aufweist.

Eine Dichte eines Materials der Anlageflächeneinrichtung bzw. des ersten und/oder zweiten Abschnitts kann mindestens 200 kg/m³, vorzugsweise mindestens 500 kg/m³, noch weiter vorzugsweise mindestens 800 kg/m³ aufweisen. Weiterhin kann eine Dicke der Anlageflächeneinrichtung (bzw. zumindest des ersten und/oder zweiten Abschnittes) mindestens 1 mm vorzugsweise mindestens 2,5 mm und/oder höchstens 30 mm, vorzugsweise höchstens 15 mm betragen. Insoweit die Dichte schwankt, kann ein Maximalwert herangezogen werden oder ein Grenzwert, oberhalb und unterhalb dessen die Dichte von jeweils 50 Vol.-% eines betrachteten Volumens liegen. Insofern die Dicke schwankt soll vorzugsweise eine maximale Dicke oder ein Grenzwert, oberhalb und unterhalb dessen die Dicke von jeweils 50 Flächen-% einer betrachteten Oberfläche liegen. Bei mehr-, insbesondere doppelwandige Schalen sollen sich die genannten Werte insbesondere auf die innere (innerste) Wand beziehen (d.h. die Anlageflächeneinrichtung wäre dann, insbesondere, die innere Wand der doppel- bzw. mehrwandigen Struktur oder Teil derselben).

Ein Material der Anlageflächeneinrichtung bzw. des ersten und/oder zweiten Abschnittes kann Kunststoff, vorzugsweise ein thermoplastischer Kunststoff und/oder ein Polymer, insbesondere auf Basis eines Polyolefin, beispielsweise Polypropylen, und/oder Polyamid sein. Generell sind alle spritzgussfähigen Materialien geeignet. Alternativ (oder zusätzlich) kann die Anlageflächeneinrichtung bzw. der erste und/oder zweite Abschnitt auch (zumindest teilweise) aus Metall, beispielsweise Aluminium oder einer Aluminiumlegierung oder Stahl ausgebildet sein.

Die Anlageflächeneinrichtung oder zumindest der erste und/oder zweite Abschnitt derselben können durch eine Anlagewand definiert sein. Weiterhin kann die Anlageflächeneinrichtung, zumindest der erste und/oder zweite Abschnitt, durch eine Polsterung oder sonstiges Zwischenelement (insbesondere innenseitig) bedeckt sein. Die Anlagewand wird vorzugsweise durch eine Sitzschale definiert.

Die Anlageflächeneinrichtung kann im Allgemeinen durch mindestens eine Seitenwand und/oder Rückwand definiert sein. Insbesondere kann die obige Anlagewand mindestens eine Seitenwand und/oder Rückwand umfassen.

Bei einer Überführung von der ersten Stellung in die zweite Stellung kann ein Abstand zwischen zumindest einem zweiten Umrandungsabschnitt einer Umrandung des zweiten Abschnitts und dem ersten Abschnitt (bzw. benachbarten zweiten Umrandungsabschnitt einer Umrandung des ersten Abschnitts) gleich bleiben.

Erster Abschnitt und zweiter Abschnitt können, insbesondere an einem/dem zweiten Umrandungsabschnitt einer Umrandung des zweiten Abschnitts, abschnittsweise (fest) miteinander verbunden sein, vorzugsweise integral miteinander ausgebildet sein. Alternativ können erster und zweiter Abschnitt auch durch getrennte Bauteile ausgebildet sein, insbesondere Bauteile, bei denen jeder Punkt beider Bauteile von dem jeweils anderen Bauteil entfernt werden kann.

In der zweiten Stellung kann im Vergleich zur ersten Stellung ein Abstand zwischen der gesamten Umrandung des zweiten Abschnittes und dem ersten Abschnitt (bzw. einem benachbarten Umrandungsabschnitt einer Wandung des ersten Abschnitts) vergrößert sein.

Erster und zweiter Abschnitt können (ggf. auch in der ersten Stellung) strukturell gegeneinander abgegrenzt sein, insbesondere durch einen Schlitz und/oder Schnitt und/oder Knick und/oder Biegeabschnitt.

Die Umrandung des zweiten Abschnittes kann mindestens einen ersten geraden Abschnitt aufweisen, insbesondere als Polygon, vorzugsweise viereckig, weiter vorzugsweise trapezförmig, ausgebildet sein. Vorzugsweise ist der erste gerade Abschnitt zumindest abschnittsweise dauerhaft, insbesondere auch in der zweiten Stellung, mit dem ersten Abschnitt verbunden und/oder die Umrandung des zweiten Abschnitts, abgesehen vom ersten geraden Abschnitt, zumindest nicht dauerhaft mit dem ersten Abschnitt verbunden, insbesondere gegenüber dem ersten Abschnitt bewegbar.

Vorzugsweise ist der zweite Abschnitt (die Wirkfläche) (in einer Seitenansicht in der ersten Stellung bzw. Ruhestellung) sich nach hinten verjüngend ausgebildet, d. h. in einem hinteren Bereich schmaler als in einem vorderen Bereich.

Vorzugsweise ist ein unterer Rand (insbesondere ein unterer gerader Rand) des (beispielsweise viereckigen, insbesondere trapezförmigen) zweiten Abschnittes (Wirkungsfläche) fest mit dem ersten Abschnitt verbunden, insbesondere derart, dass ein (gegenüberliegender) oberer (insbesondere gerader) Rand nach außen schwenken kann. Dadurch können effektiv und auf sichere Art und Weise Kräfte aufgenommen werden. Alternativ kann auch ein hinterer oder vorderer oder unterer (insbesondere gerader) Rand nach außen verschwenken.

Der zweite Abschnitt ist vorzugsweise angeordnet: im Bereich vom Kopf bis (zumindest ungefähr) zum Gesäß eines im Kindersitz aufzunehmenden Kindes, insbesondere einem Kopfbereich des Kindersitzes, beispielsweise in einem Bereich der Rückenlehne und/oder einer Kopfstütze, der/die insbesondere zur Aufnahme des Kopfes eines im Kindersitz aufgenommenen Kindes, ausgebildet ist/sind oder im Bereich von Seitenflügeln einer Sitzschale oder der Kopfstütze, insbesondere auf Höhe des Kopfes.

Ein maximaler Versatz zwischen zweitem Abschnitt und erstem Abschnitt (in der ersten Stellung) beträgt vorzugsweise nicht mehr als 10 mm, weiter vorzugsweise nicht mehr als 5 mm, noch weiter vorzugsweise nicht mehr als 2 mm, noch weiter vorzugsweise nicht mehr als 1 mm. In Ausführungsformen kann der zweite Abschnitt bündig an den ersten Abschnitt angrenzen. Unter einem Versatz ist insbesondere eine Stufe zu verstehen, die sich durch eine Nebeneinanderanordnung von zweitem Abschnitt und erstem Abschnitt (ggf.) ergeben kann. Die eben genannten Werte geben dann insbesondere die Höhe dieser Stufe an.

Vorzugsweise ist eine Blockiereinrichtung, insbesondere Anschlag, vorgesehen derart, dass eine Bewegung des zweiten Abschnitts nach innen blockiert ist (also in Richtung Kind), wobei der zweite Abschnitt in der ersten Stellung vorzugsweise gegen die Blockiereinrichtung gedrängt wird, beispielsweise aufgrund einer Federkraft, die (siehe oben) insbesondere durch eine Ausbildung des zweiten Abschnitts als Feder und/oder eine federnde Lagerung des zweiten Abschnitts bereitgestellt werden kann. Mit einer derartigen Blockiereinrichtung wird es insbesondere ermöglicht, dass der zweite Abschnitt in der ersten Stellung vorgespannt ist, so dass erst eine Vorspannkraft überwunden werden muss, bis sich der zweite Abschnitt gegenüber dem ersten Abschnitt bewegt. Dadurch kann auf einfache Art und Weise eine Kraftschwelle definiert werden, oberhalb der sich der zweite Abschnitt gegenüber dem ersten Abschnitt bewegt (bzw. anfängt zu bewegen).

Zumindest eine Wandung des Kindersitzes kann doppelwandig ausgeführt sein, wobei der zweite Abschnitt vorzugsweise Bestandteil einer inneren Wand ist.

In Ausführungsformen ist ein erster Umrandungsabschnitt der Umrandung des zweiten Abschnitts durch eine Abgrenzung (Lücke; zumindest in der zweiten Stellung) gegenüber dem ersten Abschnitt (bzw. dem umgebenden Teil der Anlageflächeneinrichtung) definiert. Vorzugsweise kann ein zweiter Umrandungsabschnitt der Umrandung durch einen Übergang zum ersten Abschnitt (bzw. zum umgebenden Teile der Anlageflächeneinrichtung) gebildet werden.

Erster und ggf. zweiter Umrandungsabschnitt der Umrandung sind vorzugsweise jeweils zusammenhängend. Die Abgrenzung ist vorzugsweise strukturell ausgebildet, beispielsweise in Form eines Schlitzes oder Schnittes oder einer sonstigen Lücke. Der Übergang kann beispielsweise nahtlos sein, er kann aber auch dergestalt sein, dass erster und zweiter Abschnitt getrennte Bauteile bilden bzw. Bestandteil getrennter Bauteile sind.

Die Umrandung des zweiten Abschnitts kann (zumindest abschnittsweise) gekrümmt, insbesondere als Bogen, ausgebildet sein. Der zweite Abschnitt der Anlageflächeneinrichtung kann eben sein (oder nicht eben).

In Ausführungsformen ist ein Übergang zwischen zweitem Abschnitt und erstem Abschnitt (bzw. umgebendem Teil der Anlageflächeneinrichtung) so ausgestaltet, dass ein Federn des zweiten Abschnittes ermöglicht ist. Dies kann (insbesondere wenn der zweite Abschnitt nach Art einer Blattfeder ausgebildet ist) bevorzugt durch die Wahl eines geeigneten Materials, beispielsweise Kunststoffes, sowie eine geeignete Dicke für den Übergangsbereich (ggf. für die gesamte Anlageflächeneinrichtung einschließlich zweitem Abschnitt) sowie durch eine geeignete Länge eines/des zweiten Umrandungsabschnittes der Umrandung erfolgen.

In einer bevorzugten Ausführungsform weist die Wandung des zweiten Abschnitts genau einen Übergangsabschnitt und genau einen abgrenzenden Abschnitt auf.

Die Blockiereinrichtung (das Blockiermittel) kann eine Bewegung des zweiten Abschnitts nach innen (zum im Kindersitz gehaltenen Kind) blockieren, jedoch eine Bewegung des zweiten Abschnittes (der Wirkungsfläche) nach außen (vom im Kindersitz gehaltenen Kind weg) erlauben, ggf. jederzeit. Die Blockiereinrichtung (das Blockiermittel) kann insbesondere einen Anschlag umfassen, der ggf. im Bereich (des gesamten) ersten Abschnittes der Umrandung oder zumindest Teilabschnitten hiervon wirksam ist. Dadurch kann effektiv verhindert werden, dass ein von außen auf den Kindersitz einwirkendes Element den zweiten Abschnitt nach innen bewegt und dadurch den Kopfbereich eines im Kindersitz gehaltenen Kindes gefährdet. Die Funktionsweise ist dabei einer Tür (ohne Verriegelung in einer der Positionen) vergleichbar.

Vorzugsweise wird die Anlageflächeneinrichtung durch eine doppelwandige Wandung (insbesondere Schale) des Kindersitzes definiert. Dabei bildet die innere Wand vorzugsweise zumindest abschnittsweise zumindest einen Teil der Anlageflächeneinrichtung aus. Insbesondere der zweite Abschnitt ist vorzugsweise Teil einer inneren Wand der Wandung (Schale) des Kindersitzes. Der zweite Abschnitt (Wirkungsfläche) kann genau einen Übergangsabschnitt und genau einen abgrenzenden Abschnitt aufweisen. Der dem zweiten Abschnitt (Wirkungsfläche) gegenüberliegende Abschnitt einer äußeren Wand der Wandung (Schale) soll vorzugsweise durchgehend ausgebildet sein und eine Schutzfunktion vor von außen auf den Kindersitz einwirkenden Elementen bereitstellen. Hierdurch wird insbesondere ein geschützter Bereich für die Bewegung des zweiten Abschnitts (Wirkungsfläche) gebildet, so dass für diese Bewegung immer der beabsichtigte Platz zur Verfügung steht und die Bewegung des zweiten Abschnittes (der Wirkungsfläche) nicht von außen eingeschränkt werden kann.

In einer weiteren Ausführungsform kann die Wandung (Schale) des Kindersitzes ebenfalls doppelwandig ausgebildet sein, wobei eine innere Wand zumindest abschnittsweise jedenfalls einen Teil der Anlageflächeneinrichtung bildet. Insbesondere der zweite Abschnitt (Wirkungsfläche) ist vorzugsweise Teil der inneren Wand der Schale des Kindersitzes. Der zweite Abschnitt (die Wirkungsfläche) weist vorzugsweise genau einen abgrenzenden Abschnitt und keinen Übergangsabschnitt auf. Ein dem zweiten Abschnitt (Wirkungsfläche) gegenüberliegender Abschnitt der äußeren Wand der Wandung (Schale) ist vorzugsweise durchgehend ausgebildet, um eine Schutzfunktion vor von außen auf den Kindersitz einwirkenden Elementen bereitzustellen. Der zweite Abschnitt (die Wirkungsfläche) ist vorzugsweise mindestens über ein elastisches Element (beispielsweise eine Feder) an der äußeren und/oder der inneren Wand gelagert. Hierdurch kann ein geschützter Bereich für die Bewegung des zweiten Abschnittes (Wirkungsfläche) gebildet werden, so dass für diese Bewegung immer der vorgesehene Platz zur Verfügung steht, wobei die Bewegung des zweiten Abschnittes (der Wirkungsfläche) nicht von außen eingeschränkt ist.

Grundsätzlich ist es möglich eine Betätigung (Überführung) des zweiten Abschnittes an einen Schwellwert zu koppeln (vor dessen Überschreitung keine Verlagerung erfolgt).

Eine maximale Belastbarkeit des zweiten Abschnitts (der Wirkungsfläche) - d.h. die Belastung, bei der eine maximale Auslenkung bzw. Verlagerung erreicht wird - kann bei einer Kraft von maximal 3000 Newton oder maximal 1500 Newton oder maximal 700 Newton oder maximal 300 Newton liegen. Die maximale Belastbarkeit kann auch geringer sein, beispielsweise maximal 100 Newton oder 40 Newton oder 10 Newton, beispielsweise wenn weitere Maßnahmen ergriffen werden. Eine solche (weitere) Maßnahme kann beispielsweise ein Seitenaufprallschutzelement sein oder ein Kraftbegrenzer. Eine maximale Auslenkung kann bei maximal 20 cm oder maximal 10 cm oder maximal 5 cm oder maximal 2 cm liegen. Unter einer (maximalen) Auslenkung ist die Auslenkung desjenigen Punktes (oder Gruppe von Punkten) des zweiten Abschnittes zu verstehen, der (die) gegenüber seiner Position in der ersten Stellung die größte Veränderung erfährt (erfahren).

Aus der maximalen Belastbarkeit und der maximalen Auslenkung können sich Federkonstanten ergeben, die ggf. zur Charakterisierung verwendet werden können.

Insbesondere bei Ausführungsformen mit einer inneren und einer äußeren Wand kann die äußere Wand (beispielsweise durch Gewichtsreduktion) beispielsweise auch nicht-durchgehend (beispielsweise rahmenartig) ausgebildet sein, wenn beispielsweise in einem an der Rückenlehne eines Fahrzeugs anliegenden Bereichs keine Gefahr des Eindringens eines Elementes von außen besteht.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Schrägansicht eines erfindungsgemäßen Kindersitzes;
- Fig. 2: eine schematische Darstellung eines Ausschnittes eines erfindungsgemäßen Kindersitzes in einer ersten Stellung;
- Fig. 3: den Ausschnitt gemäß Fig. 2 in einer zweiten Stellung;
- Fig. 4: einen Ausschnitt analog Fig. 2 gemäß einer weiteren Ausführungsform in einer ersten Stellung;
- Fig. 5: den Ausschnitt gemäß Fig. 4 in einer zweiten Stellung;
- Fig. 6: einen Ausschnitt analog Fig. 2 einer ersten Stellung gemäß einer weiteren Ausführungsform;
- Fig. 7: den Ausschnitt gemäß Fig. 6 in einer zweiten Stellung;
- Fig. 8: einen Ausschnitt analog Fig. 2 gemäß einer weiteren Ausführungsform;
- Fig. 9: den Ausschnitt gemäß Fig. 8 in einer zweiten Stellung;
- Fig. 10: einen Ausschnitt analog Fig. 2 gemäß einer weiteren Ausführungsform in einer ersten Stellung;
- Fig. 11: den Ausschnitt gemäß Fig. 10 in einer zweiten Stellung;
- Fig. 12: eine schematische Seitenansicht eines erfindungsgemäßen Kindersitzes mit teilweise freigegebenem Inneren;
- Fig. 13: einen vergrößerten Ausschnitt von Fig. 12;
- Fig. 14: einen Querschnitt durch den Kindersitz gemäß Fig. 12 und 13 mit Blick auf eine Innenseite des zweiten Abschnittes (Wirkungsfläche);
- Fig. 15: eine Ausschnittsvergrößerung von Fig. 14;
- Fig. 16: eine Schrägansicht auf den Sitz (mit Verdeck) mit Blick auf die Innenseite des zweiten Abschnitts (Wirkungsfläche);
- Fig. 17: eine Schrägansicht auf den Sitz mit Verdeck; und
- Fig. 18: ein Schnitt durch den Sitz (mit Verdeck).

In der nachfolgenden Beschreibung werden für gleiche und gleichwirkende Teile dieselben Bezugsziffern verwendet.

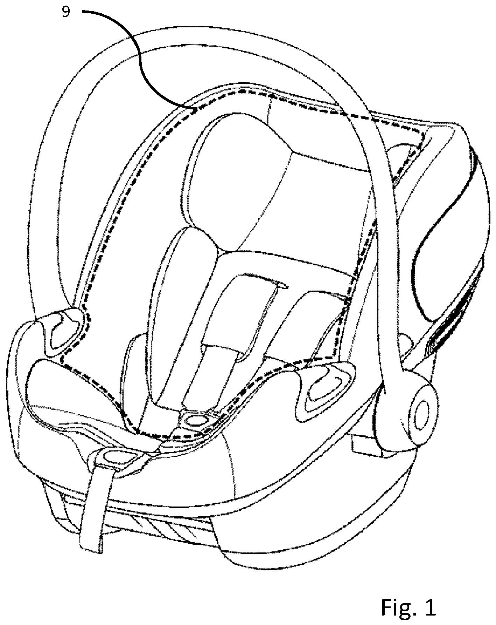

Fig. 1 zeigt eine Schrägansicht eines erfindungsgemäßen Kindersitzes, bei dem die erfindungsgemäße Anlageflächeneinrichtung nicht im Detail erkennbar ist. Ein für die Ausbildung des zweiten Abschnittes (Wirkungsfläche) geeigneter Bereich ist durch eine gestrichelte Linie 9 gekennzeichnet.

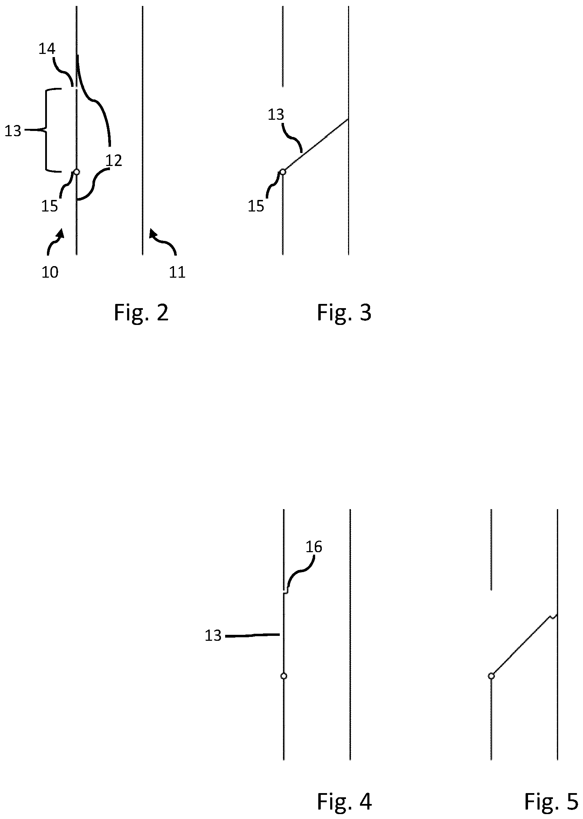

In Fig. 2 und 3 ist schematisch ein Ausschnitt einer Wandung (Schale) eines erfindungsgemäßen Kindersitzes gemäß einer ersten Ausführungsform erkennbar. Diese Ausführungsform weist eine innere Wand 10 sowie eine äußere Wand 11 auf. Die innere Wand 10 wiederum weist einen zweiten Abschnitt 13 (Wirkungsfläche) sowie einen ersten Abschnitt 12 auf. Der zweite Abschnitt 13 ist gegenüber dem ersten Abschnitt 12 (siehe Fig. 3) bei einer nach außen wirkenden Kraft (in Richtung äußerer Wand 1) bewegbar bzw. verschwenkbar. Erster Abschnitt 12 und zweiter Abschnitt 13 sind voneinander durch einen abgrenzenden (keine feste Verbindung definierenden) Abschnitt 14 sowie einen (vorzugsweise eine feste, im vorliegenden Fall gelenkige, Verbindung definierenden) Übergangsabschnitt 15 strukturell voneinander getrennt. In Fig. 2 befindet sich der zweite Abschnitt 13 in der ersten Position (ohne Kraftbelastung), in Fig. 3 befindet sich der zweite Abschnitt in der zweiten Position im Zustand (maximaler) Auslenkung.

Die Ausführungsform gemäß Fig. 4 und 5 entspricht im Wesentlichen der Ausführungsform gemäß Fig. 2 und 3, wobei hier zusätzlich eine Blockiereinrichtung (Anschlag) 16 vorgesehen ist. Die Blockiereinrichtung verhindert, dass der zweite Abschnitt 13 nach innen verschenken kann, wenn beispielsweise ein Gegenstand von außen die äußere Wand verformt oder durchbricht. Ggf. kann die Blockiereinrichtung auch eine Vorspannung des zweiten Abschnittes 13 in Richtung nach Innen ermöglichen (in der Stellung gemäß Fig. 4).

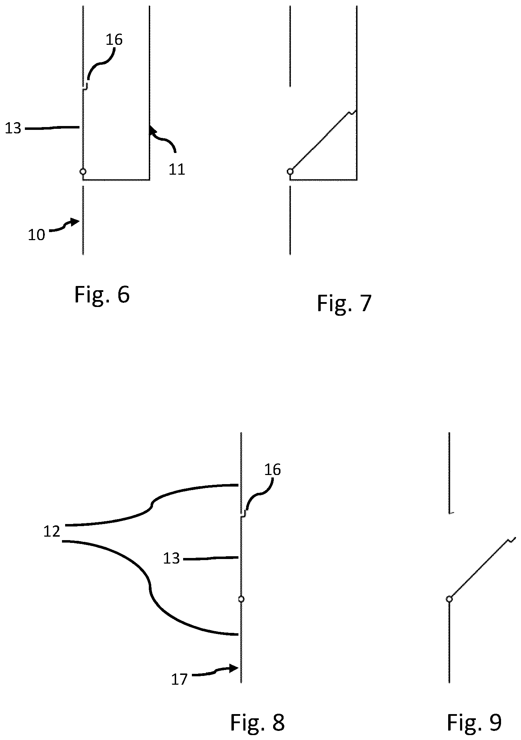

Die Ausführungsform gemäß Fig. 6 und 7 entspricht der Ausführungsform gemäß den Fig. 4 und 5 mit dem Unterschied, dass die Wandung hier nur abschnittsweise doppelt ausgeführt ist, sich also die äußere Wand 11 nicht über die gesamte innere Wand 10 erstreckt. Der zweite Abschnitt 13 ist jedoch ausführungsgemäß in dem Bereich angeordnet, der doppelwandig ausgebildet ist.

Fig. 8 und 9 zeigen im Unterschied zu Fig. 2 bis 7 eine ein-wandige Wandung mit nur einer Wand 17, jedoch mit einer Blockiereinrichtung 16 analog Fig. 4 und 5.

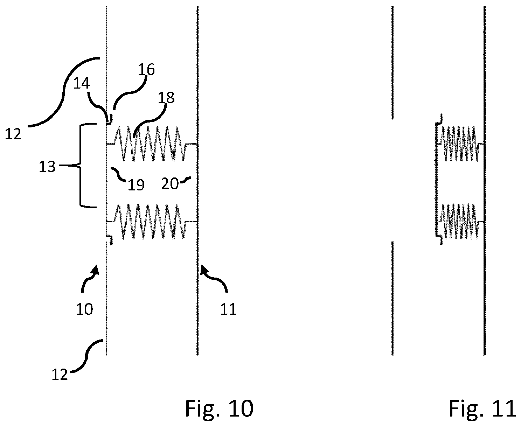

Fig. 10 und 11 zeigen wiederum eine doppelwandige Ausführungsform, grundsätzlich entsprechend Fig. 4 und 5. Im Unterschied zu Fig. 4 und 5 ist jedoch hier der zweite Abschnitt 13 gegenüber dem ersten Abschnitt 12 nicht verschwenkbar ausgebildet, sondern translatorisch beweglich und über ein Federelement 18 gelagert. Das Federelement 18 befindet sich zwischen einer äußeren Fläche 19 des zweiten Abschnittes 13 und einer inneren Fläche 20 der äußeren Wand 11. Es existiert ein abgrenzender Abschnitt 14, aber kein Übergangsabschnitt (vgl. den Übergangsabschnitt 15 gemäß Fig. 2).

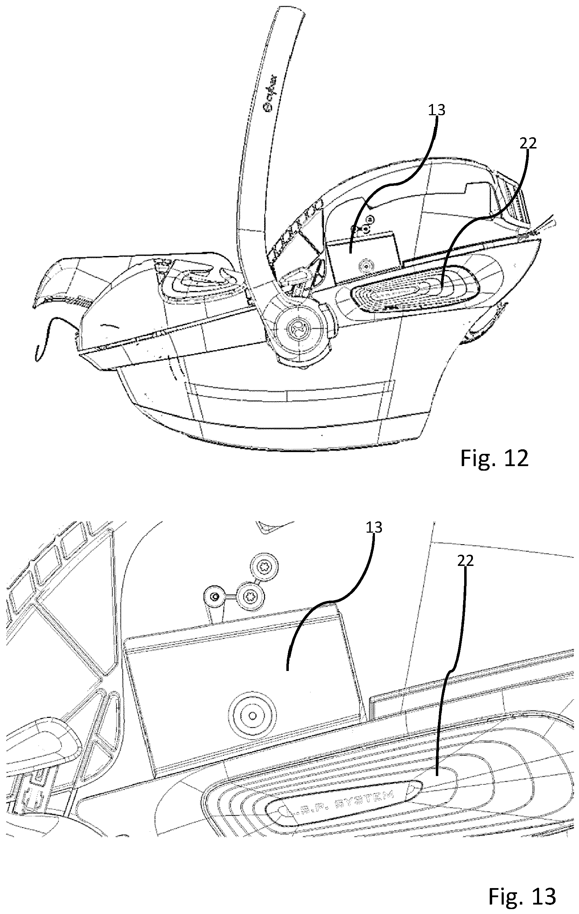

Fig. 12 zeigt eine Seitenansicht des erfindungsgemäßen Kindersitzes (mit ausgeblendetem Verdeck) einschließlich des zweiten Abschnittes 13 (bzw. der Wirkungsfläche). Dieser zweite Abschnitt 13 weist eine trapezförmige Geometrie auf und verjüngt sich nach hinten. Der zweite Abschnitt 13 ist in Fig. 13 nochmals vergrößert dargestellt.

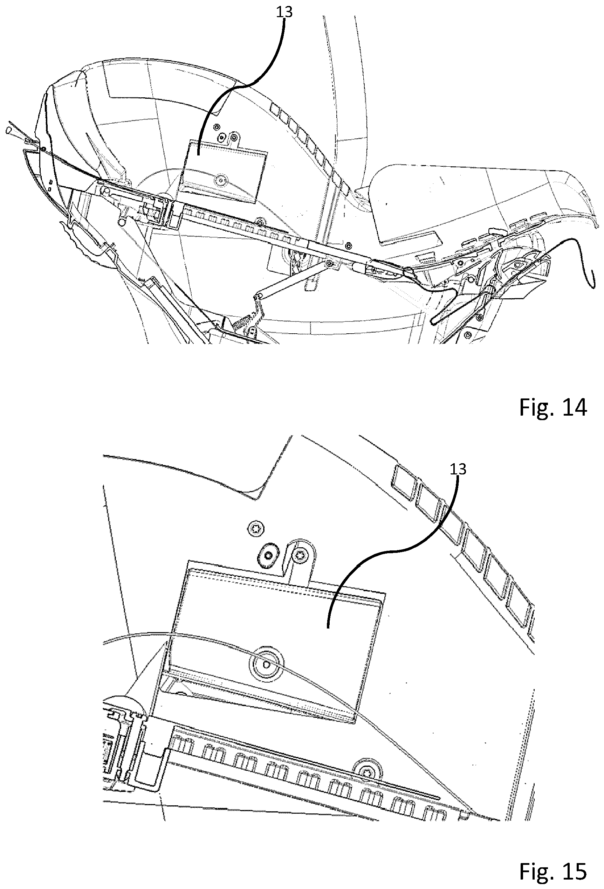

Fig. 14 zeigt einen Schnitt durch den Kindersitz gemäß Fig. 12 und 13 mit Blick auf eine Innenseite des zweiten Abschnittes 13. Eine entsprechende Ausschnittsvergrößerung um den zweiten Abschnitt 13 herum ist in Fig. 15 gezeigt.

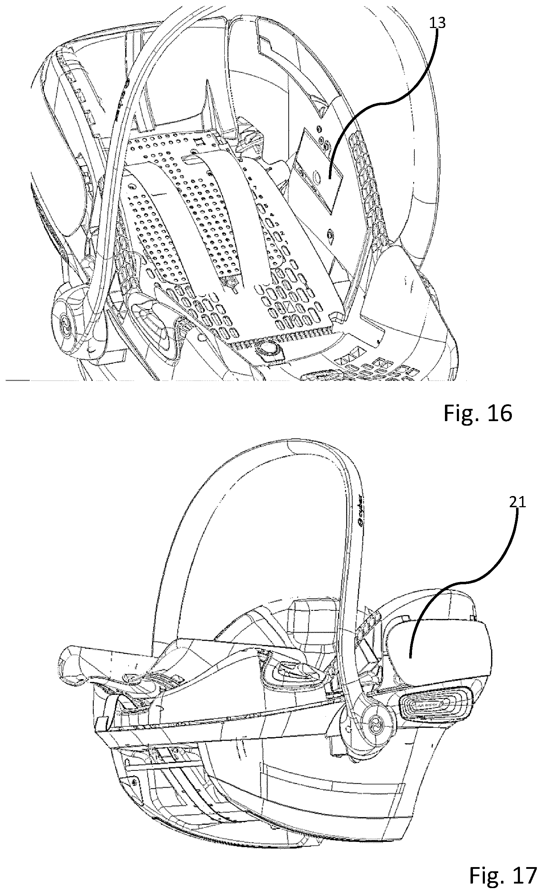

Fig. 16 zeigt eine Schrägansicht auf den erfindungsgemäßen Kindersitz gemäß Fig. 12, nun mit Verdeck, mit Blick auf die Innenseite des zweiten Abschnitts 13.

Fig. 17 zeigt eine Schrägansicht auf den Sitz mit (zumindest weitgehend) durch das Verdeck 21 überlagertem zweiten Abschnitt 13.

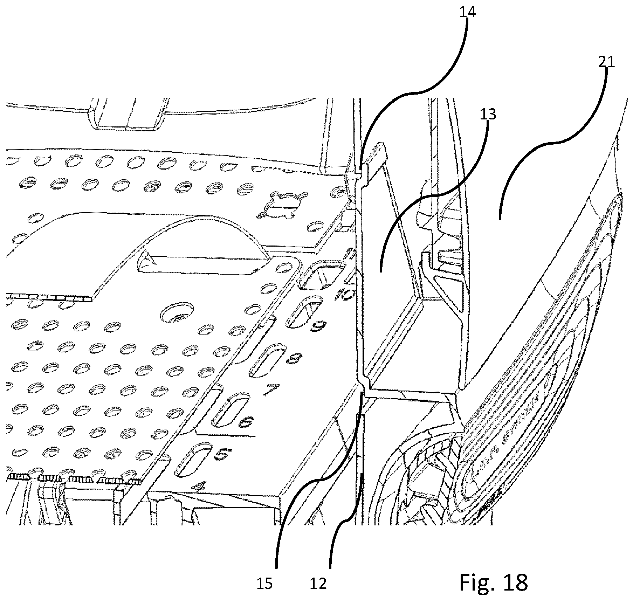

Fig. 18 zeigt einen Schnitt durch den Kindersitz (mit Verdeck 21), so dass die Lage des zweiten Abschnittes 13 zum Verdeck 21 erkennbar ist. Konkret ist in Fig. 18 erkennbar, dass der zweite Abschnitt 13 (nach oben, vorne und hinten) durch einen abgrenzenden Abschnitt 14 sowie (nach unten) durch einen Übergangsabschnitt 15 als Übergang zu dem ersten Abschnitt 12 umrandet wird. Die sich nach oben bzw. unten (im Wesentlichen vertikal) erstreckenden Randflächen sind genauso wie der (obere) abgrenzende Abschnitt 14 gegenüber der übrigen Wandung des Kindersitzes (insbesondere dem ersten Abschnitt 12) beweglich bzw. verschwenkbar.

In den Fig. 12-18 (siehe beispielsweise Fig. 12) ist weiterhin ein Seitenaufprallschutzelement 22 erkennbar, das (von einer Außenwand der Wandung des Kindersitzes aus) nach außen verlagert (verschwenkt) werden kann, um gegenüber eine äußeren Einwirkung einen Seitenaufprallschutz zu verbessern. Im Unterschied zum zweiten Abschnitt 13 (der Wirkungsfläche) ist das Seitenaufprallschutzelement 22 so angeordnet und konfiguriert, dass es (zumindest nicht im erheblichen Maße) dadurch bewegbar ist, dass das Kind bei dessen Verlagerung bzw. Aufprall in Richtung Anlagefläche (Innenwandseite) bewegt werden kann. Zu dessen Bewegung ist vielmehr vorzugsweise ein separates Betätigungsmittel vorgesehen bzw. eine separate Betätigung erforderlich, das/die es erlaubt, den Kindersitz (beispielsweise nach dessen Montage auf dem Fahrzeugsitz) so einzustellen, dass der Seitenaufprallschutz 22 nach außen verlagert ist, beispielsweise nach außen verschwenkt ist.

Ein grundsätzlicher konzeptioneller Unterschied zwischen dem Seitenaufprallschutz und der Konfiguration des zweiten Abschnitts 13 (bzw. des Dämpfungsflächenelementes) liegt also darin, dass der Seitenaufprallschutz 22 bereits (sinnvollerweise) vor einer Aufprallsituation (Unfallsituation) nach außen verlagert bzw. verschwenkt ist und der dritte Abschnitt 13 erst durch den Aufprall des Kindes gegen eine Innenwandseite des Kindersitzes entsprechend verlagert wird, um diesen Aufprall abzudämpfen.

Zweiter Abschnitt 13 und/oder Seitenaufprallschutzelement 22 können in mehrfacher, insbesondere zweifacher Ausführung, vorgesehen sein (beispielsweise jeweils ein zweiter Abschnitt 13 bzw. ein Seitenaufprallschutzelement 22 an einer Seite).

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 9: gestrichelte Linie
- 10: erste Wand
- 11: zweite Wand
- 12: erster Abschnitt
- 13: zweiter Abschnitt
- 14: abgrenzender Abschnitt
- 15: Übergangsabschnitt
- 16: Blockiereinrichtung
- 17: Wand
- 18: Federelement
- 19: innere Fläche
- 20: äußere Fläche
- 21: Verdeck
- 22: Seitenaufprallschutzelement

## Patentansprüche

1. Kindersitz zur Anbringung auf einem Kraftfahrzeugsitz, umfassend mindestens eine Anlageflächeneinrichtung (10, 11, 17) für ein auf dem Kindersitz aufgenommenes Kind, wobei die Anlageflächeneinrichtung zumindest einen ersten Abschnitt (12) und einen zweiten Abschnitt (13) aufweist, wobei der zweite Abschnitt (13) relativ zum ersten Abschnitt (12) durch Einwirken einer zumindest teilweise nach außen gerichteten, auf den zweiten Abschnitt wirkenden Kraft zur Dämpfung einer Verzögerung des Kindes bei einer Verlagerung des Kindes in Richtung des zweiten Abschnittes von einer ersten Stellung in eine zweite Stellung überführbar ist.

2. Kindersitz nach Anspruch 1,
**dadurch gekennzeichnet, dass**
in der zweiten Stellung im Vergleich zur ersten Stellung ein Abstand zwischen zumindest einem ersten Umrandungsabschnitt einer Umrandung des zweiten Abschnittes und dem ersten Abschnitt vergrößert ist, wobei der Abstand in der ersten Stellung vorzugsweise kleiner als 2 cm, weiter vorzugsweise kleiner als 1 cm, insbesondere zumindest im Wesentlichen gleich 0 ist
und/oder
wobei der Abstand in der zweiten Stellung zumindest abschnittsweise größer als 1,5 cm, vorzugsweise größer als 5 cm ist.

3. Kindersitz nach einem der vorhergehenden Ansprüche,
**dadurch gekennzeichnet, dass**
die Überführung von der ersten Stellung in die zweite Stellung reversibel ist.

4. Kindersitz nach einem der vorhergehenden Ansprüche,
**dadurch gekennzeichnet, dass**
der zweite Abschnitt gegenüber dem ersten Abschnitt verschwenkbar ist, insbesondere als Schwenkklappe ausgebildet ist, und/oder translatorisch bewegbar ist.

5. Kindersitz nach einem der vorhergehenden Ansprüche,
**dadurch gekennzeichnet, dass**
der zweite Abschnitt (13) zumindest abschnittsweise als Feder, insbesondere Blattfeder, ausgebildet ist und/oder federnd gelagert ist, insbesondere über eine Schraubenfeder (18).

6. Kindersitz nach einem der vorhergehenden Ansprüche,
**dadurch gekennzeichnet, dass**
der erste (12) und/oder zweite (13) Abschnitt aus einem zumindest im Wesentlichen formstabilen und/oder unporösen Material geformt ist/sind und/oder eine Dichte von mindestens 100 kg/m³, vorzugsweise mindestens 500 kg/m³, noch weiter vorzugsweise mindestens 800 kg/m³ aufweist/aufweisen und/oder eine Dicke von mindestens 1 mm, vorzugsweise mindestens 2,5 mm und/oder höchstens 30 mm, vorzugsweise höchstens 15 mm aufweisen.

7. Kindersitz nach einem der vorhergehenden Ansprüche,
**dadurch gekennzeichnet, dass**
die Anlageflächeneinrichtung (10, 11; 17) oder zumindest der erste (12) und/oder zweite (13) Abschnitt derselben durch eine Anlagewand definiert ist/sind und/oder durch eine Polsterung oder sonstigen Zwischenelement, insbesondere innenseitig, bedeckt ist/sind.

8. Kindersitz nach einem der vorhergehenden Ansprüche,
**dadurch gekennzeichnet, dass**
die Anlageflächeneinrichtung (10, 11; 17) durch mindestens eine Seitenwand und/oder Rückwand definiert ist, insbesondere die Anlagewand nach dem vorhergehenden Anspruch mindestens eine Seitenwand und/oder Rückwand umfasst.

9. Kindersitz nach einem der vorhergehenden Ansprüche,
**dadurch gekennzeichnet, dass**
bei einer Überführung von der ersten Stellung in die zweite Stellung ein Abstand zwischen zumindest einem zweiten Umrandungsabschnitt einer Umrandung des zweiten Abschnittes und dem ersten Abschnitt gleich bleibt und/oder wobei erster Abschnitt (12) und zweiter Abschnitt (13), insbesondere an einem/dem zweiten Umrandungsabschnitt einer Umrandung des zweiten Abschnittes (13), zumindest abschnittsweise fest miteinander verbunden sind, vorzugsweise integral miteinander ausgebildet sindoder
wobei in der zweiten Stellung im Vergleich zur ersten Stellung ein Abstand zwischen der gesamten Umrandung des zweiten Abschnittes (13) und dem ersten Abschnitt (12) vergrößert ist.

10. Kindersitz nach einem der vorhergehenden Ansprüche,
**dadurch gekennzeichnet, dass**
erster (12) und zweiter (13) Abschnitt zumindest in der ersten Stellung strukturell gegeneinander abgegrenzt sind, insbesondere durch einen Schlitz oder Schnitt.

11. Kindersitz nach einem der vorhergehenden Ansprüche,
**dadurch gekennzeichnet, dass**
die Umrandung des zweiten Abschnittes (13) mindestens einen ersten geraden Abschnitt aufweist, insbesondere als Polygon, vorzugsweise als Viereck, ausgebildet ist, wobei der erste gerade Abschnitt vorzugsweise zumindest abschnittsweise dauerhaft, insbesondere auch in der zweiten Stellung, mit dem ersten Abschnitt (12) verbunden ist und/oder die Umrandung des zweiten Abschnittes, abgesehen vom ersten geraden Abschnitt, zumindest nicht dauerhaft mit dem ersten Abschnitt (12) verbunden ist, insbesondere gegenüber dem ersten Abschnitt (12) bewegbar ist.

12. Kindersitz nach einem der vorhergehenden Ansprüche,
**dadurch gekennzeichnet, dass**
der zweite Abschnitt (13) angeordnet ist: im Bereich vom Kopf bis zum Gesäß eines im Kindersitz aufgenommenen Kindes, insbesondere in einem Kopfbereich des Kindersitzes, beispielsweise in einem Bereich der Rückenlehne und/oder einer Kopfstütze, der/die insbesondere zur Aufnahme des Kopfes eines im Kindersitz aufgenommenen Kindes, ausgebildet ist oder im Bereich von Seitenflügeln einer Sitzschale oder der Kopfstütze, insbesondere auf Höhe des Kopfes.

13. Kindersitz nach einem der vorhergehenden Ansprüche,
**dadurch gekennzeichnet, dass**
ein maximaler Versatz zwischen zweiten Abschnitt (13) und erstem Abschnitt (12) nicht mehr als 10 mm, vorzugsweise nicht mehr als 5 mm, weiter vorzugsweise nicht mehr als 2 mm, weiter vorzugsweise nicht mehr als 1 mm beträgt oder der zweite Abschnitt (13) bündig an den ersten Abschnitt (12) angrenzt.

14. Kindersitz nach einem der vorhergehenden Ansprüche,
**dadurch gekennzeichnet, dass**
eine Blockiereinrichtung (16), insbesondere ein Anschlag, vorgesehen ist derart, dass eine Bewegung des zweiten Abschnittes (13) nach innen blockiert ist, wobei der zweite Abschnitt (13) in der ersten Stellung vorzugsweise gegen die Blockiereinrichtung (16) gedrängt wird, beispielsweise aufgrund einer Federkraft.

15. Kindersitz nach einem der vorhergehenden Ansprüche,
**dadurch gekennzeichnet, dass**
zumindest eine Wandung (10, 11) des Kindersitzes doppelwandig ausgeführt ist, wobei der zweite Abschnitt vorzugsweise Bestandteil einer inneren Wand ist.
